# EUROPÄISCHE PATENTSCHRIFT

(11) **EP 0 866 250 B1**
(45) Veröffentlichungstag und Bekanntmachung des Hinweises auf die Patenterteilung: **11.04.2001**
(21) Anmeldenummer: 98102350.0
(22) Anmeldetag: 11.02.1998
(51) Int. Cl.: F16K 1/36, F16K 1/08

(54) **Ventil**
Valve
Soupape

(30) Priorität: 21.03.1997 DE 19711839
(43) Veröffentlichungstag der Anmeldung: 23.09.1998
(73) Patentinhaber: ARI-ARMATUREN ALBERT RICHTER GmbH & Co.KG., 33758 Schloss Holte-Stukenbrock (DE)
(72) Erfinder: Unruh, Roland, Dipl.-Ing., 31787 Hameln (DE); Kesselhut, Rainer, Dipl.-Ing., 33165 Herbram (DE); Kramig, Heinrich, Dipl.-Ing., 33129 Delbrück (DE)
(74) Vertreter: Stracke, Alexander, Dipl.-Ing.

(56) Entgegenhaltungen:
- EP-A- 0 020 239
- DE-A- 2 156 678
- DE-A- 2 221 511
- DE-A- 3 609 772
- DE-U- 8 912 795

## Beschreibung

Die Erfindung betrifft ein Ventil gemäß dem Oberbegriff des Anspruches 1.

Ein derartiges Ventil ist beispielsweise aus der DE 36 09 772 bekannt. Darin wird ein Ventil gezeigt und beschrieben, bei dem der Schnittpunkt aller an der Sitzfläche anliegenden Mantellinien die Spitze eines imaginären Kegels bilden, der Ventilsitz selbst also einen Schrägschnitt durch diesen Kegel darstellt.

Grundsätzlich hängen die Durchflußleistungen bei einem solchen Ventil vom Öffnungswinkel ab, der die Mantellinien und damit den Durchflußquerschnitt beeinflußt. Dieser soll möglichst groß gewählt werden, um ein weitgehend ungehindertes Durchströmen des Mediums zu ermöglichen.

Zu berücksichtigen ist dabei allerdings, daß solche Ventile in Ihren Abmessungen, insbesondere hinsichtlich ihrer Baulänge, genormt sind, so daß die bekannte Sitzflächengestaltung nicht geeignet ist, eine Durchflußoptiomierung zu ermöglichen.

So kann beispielsweise ein großer, strömungsgünstiger Öffnungsquerschnitt deshalb nicht realisiert werden, weil die normenabhängigen äußeren Baumaße den Kegelöffnungswinkel begrenzen.

Zur genannten Durchflußleistung zählen neben der Durchflußgeschwindigkeit und der Durchflußmenge von reinen Flüssigkeiten auch die gleichen Parameter bei mit Feststoffen befrachteten Flüssigkeiten. Hier ist der Einsatz der bekannten Ventile bislang problematisch.

Der vorliegenden Erfindung liegt daher die Aufgabe zugrunde, ein Ventil der gattungsgemäßen Art so zu gestalten, daß eine Leistungsoptimierung des Durchflusses möglich ist.

Diese Aufgabe wird durch ein Ventil gelöst, das die Merkmale von Anspruch 1 aufweist. Vorteilhafte Ausgestaltungen des erfindungsgemäßen Ventils sind in den abhängigen Ansprüchen definiert.

Diese konstruktiven Ausgestaltungen eines Ventiles bieten gegenüber den aus dem Stand der Technik bekannten erhebliche Vorteile.

Zunächst einmal kann der durch die Normierung bezüglich der Baulänge zur Verfügung stehende Raum für einen größtmöglichen Öffnungsquerschnitt im Ventilsitzbereich genutzt werden.

Der Winkel, unter dem die Sitzfläche des Ventilsitzes schräg zur Strömungsrichtung geneigt ist, richtet sich nach der Lagestabilität und der Selbstzentrierung des Verschlußstückes, das im Anlagebereich der Sitzfläche angepaßt ist.

Dabei kann der Neigungswinkel der Sitzfläche umlaufend gleich groß oder unterschiedlich sein, immer bezogen auf die Senkrechte zur Durchflußrichtung. Entscheidend ist, daß die Schnittpunkte der sich jeweils diametral gegenüberliegenden, an die Sitzfläche angelegten Tangenten eine Fläche einschließen, also keine gemeinsame Rotationsachse aufweisen, wie dies im genannten Stand der Technik der Fall ist.

Neben einer verbesserten Funktionsfähigkeit, insbesondere hinsichtlich eines verringerten Durchströmungswiderstandes, bietet die erfindungsgemäße Lösung auch den Vorteil eines größeren Einsatzbereiches.

Darüber hinaus erfolgt durch die Anpassung des Verschlußkörpers im Anlagebereich zur Sitzfläche dessen Selbstzentrierung. Überdies ist die Verschlußkraft, die auf den Verschlußkörper mittels einer Spindel aufgebracht werden muß, um eine Dichtigkeit zu erreichen, gering, was ebenfalls eine Verbesserung der Bedienung der Armatur darstellt.

Daneben ist die Herstellung eines solchen Ventiles relativ einfach, da die Sitzfläche durch spanabhebende Bearbeitung hergestellt werden kann.

Weiter vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Ventilsitz eines erfindungsgemäßen Ventiles in einer schematischen Perspektivdarstellung,
- Figur 2: zeigt eine Ausführungsform eines Ventilsitzes, die nicht Bestandteil der vorliegenden Erfindung ist,
- Figur 3-4: jeweils verschiedene Ausführungsformen von Ventilsitzen in schematischer Darstellung eines erfindungsgemäßen Ventiles im Längsschnitt,
- Figur 5: ein weiteres Ausführungsbeispiel eines schematisch gezeigten erfindungsgemäßen Ventiles gleichfalls in einem Längsschnitt.

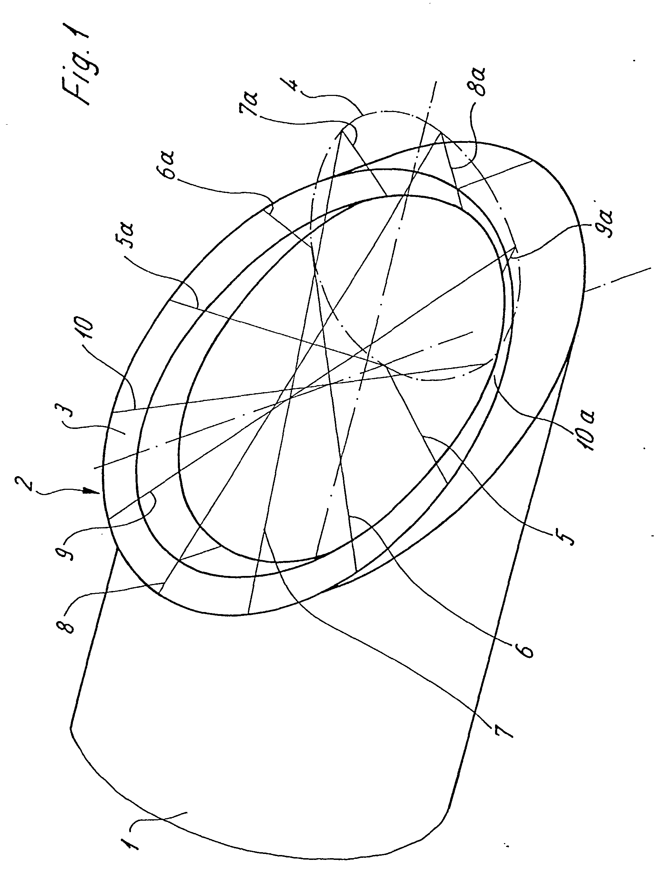

In der Figur 1 ist ein Teil eines Ventiles in Form einer Zuflußleitung 1 dargestellt, die einen Ventilsitz 2 aufweist, der unter einem Winkel, beispielsweise unter 45°, schräg verläuft, der jedoch bei Klappenventilen unter 90° quer verlaufen kann.

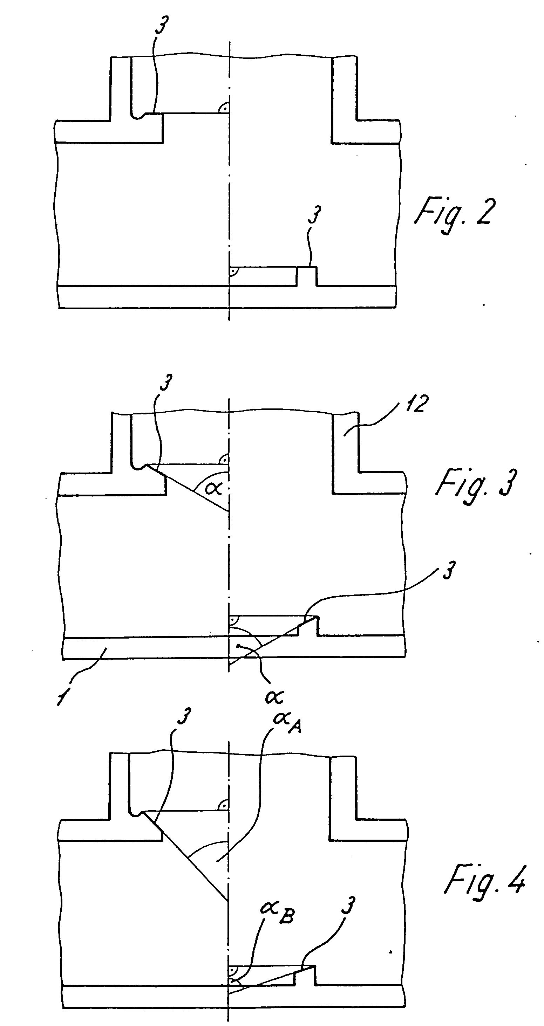

Dieser Ventilsitz 2 weist eine Sitzfläche 3 auf die unter einem Winkel α (Figuren 3 und 4) bezogen auf eine Senkrechte zur Durchströmrichtung schräg verläuft.

Wie die Figur 1 besonders deutlich zeigt, umschließen alle Schnittpunkte der sich jeweils diametral gegenüberliegenden, an die Sitzfläche 3 angelegten Mantellinien 5 und 6, 7 und 8, 9 und 10 und 5a bis 10a eine Fläche, deren Umfang durch die strichpunktierte Linie 4 gekennzeichnet ist.

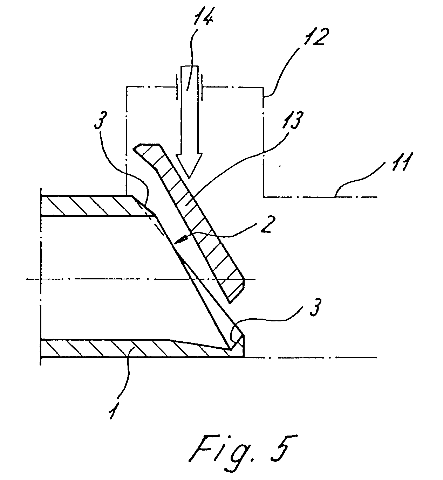

Bei dem in der Figur 3 gezeigten Beispiel ist die Sitzfläche 3 umlaufend unter demselben Winkel α senkrecht zur Durchflußrichtung geneigt, wobei die Senkrechte gleichzeitig die Wirkrichtung einer Spindel 14 bilden kann, durch die ein Verschlußstück 13 (Figur 5) an die Sitzfläche 3 anpreßbar ist.

Der Winkel α ist bei dem in der Figur 4 gezeigten Ausführungsbeispiel über den Umfang der Sitzfläche 3 hinweg unterschiedlich, wobei er zur besseren Verdeutlichung bei dem oberen Sitzflächenquerschnitt mit α A und bei dem unteren Sitzflächenquerschnitt mit α B bezeichnet ist.

Die Größe des jeweiligen Winkels wird bestimmt von den betrieblichen Erfordernissen, die sich unter anderem nach dem Durchflußmedium richten.

Im übrigen zeigen die Figuren 2-4, daß sich an die Zuflußleitung 1 eine Abflußleitung 11 anschließt, während eine senkrecht dazu stehende Muffe 12 die Aufnahme für das Verschlußstück 13 bzw. die Spindel 14 bildet.

Eine nicht erfindungsgemäße Ausführungsform ist in der Figur 2 gezeigt. Darin verläuft die Sitzfläche 3 im Winkel von 90° zur Senkrechten der Durchflußrichtung, so daß, im Querschnitt gesehen, die Sitzflächen 3 parallel zueinander verlaufen.

In der Figur 5 ist gleichfalls ein Ventilsitz 2 zu erkennen, dessen Sitzfläche 3 so abgeschrägt ist, daß sie im oberen und gegenüberliegenden unteren Bereich jeweils einen unterschiedlichen Winkel α A und **α** B zur Senkrechten aufweist.

In dieser Figur ist auch zu erkennen, daß das Verschlußstück 13 auf seiner mit der Sitzfläche 3 in Verbindung bringbaren Seite den Sitzflächenwinkeln α A und α B angepaßt ist, wobei hier eine Selbstzentrierung des Verschlußstückes 13 beim Schließen erfolgt.

### Bezugszeichenliste

- 1: Zuflußleitung
- 2: Ventilsitz
- 3: Sitzfläche
- 4: Umfang
- 5: Mantellinie
- 6: Mantellinie
- 7: Mantellinie
- 8: Mantellinie
- 9: Mantellinie
- 10: Mantellinie
- 11: Abflußleitung
- 12: Muffe
- 13: Verschlußstück
- 14: Spindel

## Patentansprüche

1. Ventil mit einem Gehäuse, das eine Zufluß- und eine Abflußleitung (1, 11) aufweist, die durch ein verstellbares Verschlußstück (13) voneinander trennbar sind, wobei dies dann an einem umlaufenden Ventilsitz (2) anliegt, der durch eine Vielzahl von Mantellinien (5 bis 10a) definiert ist, **dadurch gekennzeichnet, daß** die Sitzfläche (3) des Ventilsitzes (2) umlaufend so geneigt ist, daß die Schnittpunkte der sich jeweils diametral gegenüberliegenden Mantellinien (5 bis 10a) eine Fläche einschließen.

2. Ventil nach Anspruch 1, **dadurch gekennzeichnet, daß** der Neigungswinkel α der Sitzfläche (3) über den gesamten Umfang gleich groß zur Senkrechten zur Durchflußrichtung ist.

3. Ventil nach Anspruch 1, **dadurch gekennzeichnet, daß** der Neigungswinkel α der Sitzfläche (3) zumindest über einen Teil des Umfanges unterschiedlich zur Senkrechten zur Durchflußrichtung ist.

4. Ventil nach einem oder mehreren der Ansprüche 1 bis 3, **dadurch gekennzeichnet**, **daß** an dem Verschlußstück (13) eine Spindel (14), je nach Schrägstellung des Ventilsitzes (2) außermittig angelenkt ist.

## Claims

1. Valve with a housing which has an inflow duct (1) and an outflow duct (11), which are separable from one another by an adjustable closure member (13), wherein this then bears against an encircling valve seat (2) defined by a plurality of surface lines (5 to 10a), characterised in that the seat surface (3) of the vale seat (2) is so inclined rotationally that the points of intersection of the respective diametrically opposite surface lines (5 to 10a) include an area.

2. Valve according to claim 1, characterised in that the angle α of inclination of the seat surface (3) relative to the normals to the throughflow direction is the same over the entire circumference.

3. Valve according to claim 1, characterised in that the angle α of inclination of the seat surface (3) relative to the normals to the throughflow direction is different over at least a part of the circumference.

4. Valve according to one or more of claims 1 to 3, characterised in that a spindle (14) is articulated to the closure member (13) eccentrically in accordance with the respective oblique setting of the valve seat (2).

## Revendications

1. Soupape comprenant une cage présentant une conduite d'amenée et une conduite d'évacuation (1, 11), ces conduites pouvant être séparées l'une de l'autre par un organe de fermeture (13) déplaçable, cet organe s'appliquant alors sur un siège de soupape (2) circonférentiel défini par une pluralité de génératrices (5 à 10a), **caractérisée en ce que** la surface de siège (3) du siège de soupape (2) est inclinée, sur sa circonférence, de telle sorte que les points d'intersection des génératrices (5 à 10a), qui sont diamétralement opposées les unes aux autres, encerclent une surface.

2. Soupape selon la revendication 1, caractérisée en ce que l'angle d'inclinaison a de la surface de siège (3), sur tout le périmètre, est le même, par rapport à la perpendiculaire à la direction d'écoulement.

3. Soupape selon la revendication 1, caractérisée en ce que l'angle d'inclinaison α. de la surface de siège (3), au moins sur une partie du périmètre, est différent, par rapport à la perpendiculaire à la direction d'écoulement.

4. Soupape selon l'une ou plusieurs des revendications 1 à 3, caractérisée en ce qu'une tige (14) est articulée sur l'organe de fermeture (13), de façon excentrée en fonction de la position inclinée du siège de soupape (2).
